# EUROPEAN PATENT SPECIFICATION

(11) **EP 1 565 952 B1**
(45) Date of publication and mention of the grant of the patent: **16.04.2008**
(21) Application number: 03775391.0
(22) Date of filing: 25.11.2003
(51) Int. Cl.: H01M 4/88, H01M 4/92

(54) **METAL ALLOY FOR ELECTROCHEMICAL OXIDATION REACTIONS AND METHOD OF PRODUCTION THEREOF**
METALLLEGIERUNG FÜR ELEKTROCHEMISCHE OXYDATIONSREAKTIONEN UND VERFAHREN ZU DEREN HERSTELLUNG
ALLIAGE METALLIQUE DESTINE A DES REACTIONS D'OXYDATION ELECTROCHIMIQUE ET SON PROCEDE DE PRODUCTION

(30) Priority: 26.11.2002 US 305295
(43) Date of publication of application: 24.08.2005
(73) Proprietor: BASF Fuel Cell GmbH, 65926 Frankfurt am Main (DE)
(72) Inventor: CAO, Lixin, Highland Park, NJ 08904 (US); TSOU, Yu-Min, Princeton, NJ 08540 (US); DE CASTRO, Emory, Nahant, MA 01908-1028 (US)
(74) Representative: Luderschmidt, Schüler & Partner
(86) International application number: PCT/EP2003/013250
(87) International publication number: WO 2004/049477

(56) References cited:
- EP-A- 0 898 318
- WO-A-98/46805
- WO-A-99/66574

## Description

### BACKGROUND OF THE INVENTION

Direct methanol fuel cells (DMFC) are widely known membrane electrochemical generators in which oxidation of an aqueous methanol solution occurs at the anode. As an alternative, other types of light alcohols such as ethanol, or other species that can be readily oxidized such as oxalic acid, can be used as the anode feed of a direct type fuel cell, and the catalyst of the invention can be also useful in these less common cases.

In comparison to other types of low temperature fuel cells, which generally oxidize hydrogen, pure or in admixture, at the anode compartment, DMFC are very attractive as they make use of a liquid fuel, which gives great advantages in terms of energy density and is much easier and quicker to load. On the other hand, the electrooxidation of alcohol fuels is characterized by slow kinetics, and requires finely tailored catalysts to be carried out at current densities and potentials of practical interest. DMFC have a strong thermal limitation as they make use of an ion-exchange membrane as the electrolyte, and such component cannot withstand temperatures much higher than 100°C which affects the kinetics of oxidation of methanol or other alcohol fuels in a negative way and to a great extent.

The quest for improving the anode catalysts has been ceaseless at least during the last twenty years. It is well known to those skilled in the art that the best catalytic materials for the oxidation of light alcohols are based on binary or ternary combinations of platinum and other noble metals. In particular, platinum-ruthenium binary alloys are largely preferred in terms of catalytic activity, and they have been used both as catalyst blacks and as supported catalyst, for example on active carbon, and in most of the cases incorporated into gas diffusion electrode structures suited to be coupled to ion-exchange membranes.

WO 99/66574 discloses Pt/R₄ catalyst manufactured by a deposition reaction of a R₄⁻ complex over blade Pt to obtain Pt/R₄ clusters

Platinum and ruthenium are, however, very difficult to combine into true alloys: the typical Pt:Ru 1:1 combination disclosed in the prior art almost invariably results in a partially alloyed mixture. The method for the production of binary combinations of platinum and ruthenium of the prior art starts typically from the co-deposition of colloidal particles of suitable compounds of the two metals on a carbon support, followed by chemical reduction. Co-deposition of platinum and ruthenium chlorides or sulfites followed by chemical reduction in aqueous or gaseous environment lies probably in the very different reactivity of the two metal precursors towards the reducing agents. The platinum complex is invariably reduced much more quickly, and a phase separation of the two metal occurs before the conversion is completed. A platinum-rich alloy and a separate ruthenium phase are thus commonly observed.

### OBJECTS OF THE INVENTION

It is an object of the invention to provide a method for obtaining highly alloyed catalysts optionally supported on an inert support.

It is another object of the invention to provide a method for obtaining highly alloyed platinum-ruthenium combinations exhibiting a high catalytic activity towards the oxidation of methanol and other organic fuels.

It is another object of the invention to provide a catalyst with high activity for the electrooxidation of organic species.

It is yet another object of the present invention to provide an electrochemical process for highly efficient oxidation of light organic molecules.

### SUMMARY OF THE INVENTION

The invention consists of a method for the production of alloyed catalysts starting from complexes of the two metals with organic ligands, comprising a decomposition thermal treatment followed upon completion by a reduction treatment wherein the difference in the decomposition temperatures of said metal complexes is less than 20°C. Under another aspect, the invention consists of a method for the production of alloyed platinum-ruthenium catalysts starting from complexes of the two metals with organic ligands, comprising a decomposition thermal treatment followed upon completion by a reduction treatment wherein the difference in the decomposition temperatures of said metal complexes is less than 20°C

### DETAILED DESCRIPTION OF THE PREFERRED EMBODIMENTS

The method for the production of alloyed catalysts of the invention provides a simultaneous reduction of the two metals which is made possible by a careful choice of the precursors. In the following description, reference will be made to the production of highly alloyed platinum-ruthenium binary catalysts for fuel cells, but it will be apparent to one skilled in the art that the method has a more general validity for several kinds of other alloys.

It has been surprisingly found that organic complexes of platinum and ruthenium, in contrast to salt precursors such as chlorides or sulfites, usually have very similar temperatures of decomposition, their difference being e.g. lower than 20°C, and in some cases as low as 10°C. The latter is, for instance, the case of Pt and Ru complexes with 2,4-pentanedioate, a ligand which is also known under the ordinary name of acetylacetonate (henceforth abbreviated as "acac", as common in the art). Acetylacetonate is a particularly preferred ligand also because it is commercially available and straightforward to handle.

The preferred procedure for practicing the invention must take advantage of the close decomposition temperatures of the two precursors, leading to a simultaneous conversion of the complexes and at the same time minimizing the formation of oxides. To achieve this, the thermal treatment leading to decomposition should start with a heating step to be carried out with a fast ramping rate, so that the platinum complex has virtually no time to start reacting before the decomposition of ruthenium starts taking place as well, and the whole thermal treatment should be carried out in the absence of air or other oxidizing species.

To avoid a too quick decomposition of platinum, it is anyway mandatory that the reduction treatment of the catalyst, which is preferably carried out with hydrogen, begin at a temperature not lower than 260°C. The preferred platinum precursor, which is Pt(acac)₂, starts decomposing around 250°C, while the preferred ruthenium precursor, Ru(acac)₃, starts decomposing at 260°C. It is preferable, therefore, that no reducing agent come in contact with the catalyst material before a temperature of 260°C is attained and the most preferred reduction temperature is around 300°C, for instance between 280 and 320°C.

To take all these different factors into account, in a preferred embodiment, the platinum and ruthenium complexes, usually absorbed on an inert support such as conductive carbon, are rapidly heated in an inert atmosphere, for example an argon atmosphere, until reaching a final temperature of 300 ± 20°C. Once the final temperature is reached, the reduction step may take place, for instance by blending 10-20% of hydrogen into the argon atmosphere until completion. In a preferred embodiment, after reaching the final temperature, the catalyst material is kept in inert atmosphere for a few hours more, for instance 2 to 4 hours, as an additional safety measure. After conversion, the flow of the reducing agent is stopped, and the catalyst is cooled down in inert atmosphere to room temperature. The catalyst so obtained can be incorporated in a gas diffusion anode to be used in a DMFC or other kind of direct fuel cell, showing a higher activity due to the much higher extent of alloy formation.

The method of the invention will be now illustrated making use of a few examples, which are not, however, intended as limiting the same.

### EXAMPLE 1

35 g of Vulcan XC-72 conductive carbon were suspended in a 2 liter beaker containing 1 liter of acetone. The mixture was subjected to vigorous dispersion with a Silverson^{R} disperser for 10 minutes. In a separate 5 liter flat-bottom flask, 21.9 grams of Pt(acac)₂ and 22.2 grams of Ru(acac)₃ were suspended in 1.5 liters of acetone. The carbon dispersion was then transferred to the noble metal dispersion, and the resulting mixture was stirred for 30 minutes while the flask was maintained at 25°C by means of a water bath. The slurry so obtained was sonicated for 30 minutes and stirred magnetically overnight. Acetone was then evaporated by placing the flask in a water bath at 60°C. After 6 hours, most of the solvent was removed. A stream of nitrogen was passed through the mixture to bring the evaporation to completion. 79.0 grams of carbon impregnated with catalytic material were obtained at this stage.

This sample was heated in an argon stream at a rate of 30°C/minute until reaching 300°C. After thermal stabilization, the pure argon flow was replaced with a 15% hydrogen flow in argon at a flow-rate of 200 ml/minute. After 3 hours, the reducing atmosphere was again replaced with a pure argon stream at a flow-rate of 100 ml/minute. After 3 hours, the reducing atmosphere was again replaced with a pure argon stream at a flow-rate of 100 ml/minute. The sample was finally allowed to cool to room temperature.

### EXAMPLE 2

A Vulcan XC-72 carbon sample impregnated with Pt(acac)₂ and Ru(acac)₃ was obtained as in Example 1. The resulting sample was heated in an argon stream at a rate of 30°C/minute until reaching 300°C, then, still under argon, the temperature was held at 300°C for 3 hours. Finally, the temperature was allowed to cool to room temperature under argon. During the entire process, no hydrogen was used.

### EXAMPLE 3

A Vulcan XC-72 carbon sample impregnated with Pt(acac)₂ and Ru(acac)₃ was obtained as in the previous examples. The resulting sample was subjected to a 100 ml/minute of 15% hydrogen in argon stream at room temperature, then heated to 300°C at a rate of 30°C/minute. After holding at 300°C for 3 hours, the gas stream was switched to pure argon and the sample was allowed to cool to room temperature.

### EXAMPLE 4

A Vulcan XC-72 carbon sample impregnated with Pt(acac)₂ and Ru(acac)₃ was obtained as in the previous examples.

The sample was heat treated as in Example 1, except that the heating ramp was 5°C/minute instead of 30°C/minute.

### EXAMPLE 5

The four catalysts obtained in the previous examples were subjected to X-ray diffraction. Alloy formation was evaluated through the shift of the 220 peak. The particle size of the catalyst of Example 3 resulted much bigger than those of the remaining three catalysts. Moreover, as the analysis of the alloy phase in the following Table shows, almost complete alloys were formed in Examples 1 and 2 (Ru = 52-53% vs. a theoretical value of 50%), while in the conditions of Example 4, the alloying was less complete (Ru = 44%); in the conditions of Example 3, when hydrogen was fed since the start of the thermal cycle, the extent of the alloying was clearly insufficient (Ru = 19.9%).

**Table - alloy extent analysis evaluated through the (220) peak**

| Example# | d(220) | T(220) | a-d(220) | a-T(220) | Average | Ru(mol%) |
|---|---|---|---|---|---|---|
| 1 | 1.3696 | 68.447 | 3.8738 | 3.8769 | 3.8753 | 52.5 |
| 2 | 1.3695 | 68.450 | 3.8735 | 3.8767 | 3.8751 | 52.8 |
| 3 | 1.3801 | 67.853 | 3.9035 | 3.9067 | 3.9051 | 19.9 |
| 4 | 1.3722 | 68.300 | 3.8812 | 3.8842 | 3.8827 | 44.5 |

Therefore, the results indicate that only argon should be used in the decomposition of the two acetylacetonate complexes. If hydrogen is used before decomposition occurs, platinum will be preferentially reduced and result in a lower alloy extent, since Ru(acac)₃ is reduced much more slowly than Pt(acac)₂. Conversely, the hydrogen treatment after complete decomposition appeared to have a negligible effect in this regard. At the same time, the heating rate should be relatively fast to ensure a virtually simultaneous decomposition instead of sequential decomposition of Pt(acac)₂ (starting around 250°C), followed by Ru(acac)₃ (starting around 260°C).

The test of the catalyst was conducted by rotating disk electrode (RDE). A dilute ink of carbon-supported catalyst was prepared by mixing 33 mg of supported catalyst with 50 ml of acetone. A total of 10 microliters of this ink was applied in two to four coats onto the tip of a glassy carbon rotating electrode of 6 mm diameter.

The electrode was placed in a solution of 0.5 M H₂SO₄ containing 1 M of methanol at 50°C. A platinum counter electrode and a Hg/Hg₂SO₄ reference electrode were connected to a Gamry Potentiostat along with rotator (Pine Instrument) and the rotating disk electrode (Perkin Elmer). Under 2500 RPM, a potential scan was applied (10 mV/s) whereby a plateau representing dissolved methanol oxidation was recorded. The rising portion of the curve was used as the measure for activity towards methanol oxidation. The more negative this rising portion occurs, the more active is the catalyst. The actual comparison is carried out by recording the intersection point between the baseline of the rotating disk voltammogramme (current = 0) and the rising portion of the curve for different catalyst. This value is defined as the ignition potential, which is lower as more active is the catalyst. In the above disclosed conditions, the catalysts of the Examples 1 and 2 both showed an ignition potential of -0.33 V vs. Hg/Hg₂SO₄, while a carbon supported Pt.Ru 1:1 catalyst according to the prior art (commercialized by the De Nora North America, Inc., E-TEK division) showed an ignition potential of -0.18V, and a state-of-the art carbon supported Pt catalyst, also commercialized by De Nora North America, USA, showed an ignition potential of -0.09 V.

## Claims

1. A method for the production of alloyed catalysts comprising a multiplicity of metals, comprising the step of simultaneously decomposing precursor complexes of said metals with organic ligands by means of a thermal treatment, followed by a reduction treatment, wherein the difference in the decomposition temperatures of said metal complexes is less than 20°C.

2. The method of claim 1 wherein said simultaneously decomposed precursor complexes are previously absorbed on an inert support, optionally comprising conductive carbon.

3. The method of claim 1, wherein the simultaneously decomposed precursor complexes are a platinum complex and a ruthenium complex.

4. The method of claim 3 wherein said simultaneously decomposed platinum complex and ruthenium complex are previously absorbed on an inert support, optionally comprising conductive carbon.

5. The method of claim 3 or 4 wherein said organic ligands of said platinum complex are the same as said organic ligands of said ruthenium complex.

6. The method of claim 3 wherein said organic ligands comprise 2,4-pentanedioate.

7. The method of claim 6 wherein said organic complexes are Pt(acac)₂and Ru(acac)₃

8. The method of any one of the preceding claims wherein said thermal treatment is effected in an inert atmosphere.

9. The method of claim 8 wherein said inert atmosphere comprises argon.

10. The method of any one of the preceding claims wherein said thermal treatment comprises heating with a ramping rate of at least 20°C/minute up to a final temperature of at least 260°C.

11. The method of claim 10 wherein said ramping rate is at least 30°C/minute and said final temperature is between 280 and 320°C.

12. The method of claim 10 wherein said final temperature is maintained constant for 2 to 4 hours.

13. The method of any one of the preceding claims wherein said reduction treatment is carried out with hydrogen.

14. The method of claim 13 wherein said thermal treatment is effected in an argon inert atmosphere until reaching a temperature between 280 and 320°C and said reduction treatment is carried out by blending 10 to 20% hydrogen gas in said argon atmosphere at the same temperature.

15. The method of any one of the preceding claims wherein said reduction treatment is followed by a cooling treatment under inert atmosphere down to room temperature.

16. The method of claim 15 wherein said inert atmosphere comprises argon.

## Patentansprüche

1. Verfahren zur Herstellung legierter Katalysatoren, die mehrere Metalle umfassen, wobei das Verfahren den Schritt des gleichzeitigen Zersetzens von Vorläuferkomplexen der Metalle mit organischen Liganden mittels einer Wärmebehandlung, auf die eine Reduktionsbehandlung folgt, umfasst, wobei der Unterschied der Zersetzungstemperaturen der Metallkomplexe weniger als 20 °C beträgt.

2. Verfahren nach Anspruch 1, wobei die gleichzeitig zersetzten Vorläuferkomplexe zuvor auf einem inerten Träger, der gegebenenfalls leitfähigen Kohlenstoff umfasst, absorbiert werden.

3. Verfahren nach Anspruch 1, wobei es sich bei den gleichzeitig zersetzten Vorläuferkomplexen um einen Platinkomplex und einen Rutheniumkomplex handelt.

4. Verfahren nach Anspruch 3, wobei der Platinkomplex und der Rutheniumkomplex, die gleichzeitig zersetzt werden, zuvor auf einem inerten Träger, der gegebenenfalls leitfähigen Kohlenstoff umfasst, absorbiert werden.

5. Verfahren nach Anspruch 3 oder 4, wobei die organischen Liganden des Platinkomplexes mit den organischen Liganden des Rutheniumkomplexes identisch sind.

6. Verfahren nach Anspruch 3, wobei die organischen Liganden 2,4-Pentandioat umfassen.

7. Verfahren nach Anspruch 6, wobei es sich bei den organischen Komplexen um Pt(acac)₂ und Ru(acac)₃ handelt.

8. Verfahren nach einem der vorhergehenden Ansprüche, wobei die Wärmebehandlung in einer inerten Atmosphäre durchgeführt wird.

9. Verfahren nach Anspruch 8, wobei die inerte Atmosphäre Argon umfasst.

10. Verfahren nach einem der vorhergehenden Ansprüche, wobei die Wärmebehandlung Erhitzen mit einer Steigerungsrate von mindestens 20 °C/Minute bis zu einer Endtemperatur von mindestens 260 °C umfasst.

11. Verfahren nach Anspruch 10, wobei die Steigerungsrate mindestens 30 °C/Minute beträgt und die Endtemperatur zwischen 280 und 320 °C liegt.

12. Verfahren nach Anspruch 10, wobei die Endtemperatur für 2 bis 4 Stunden konstant gehalten wird.

13. Verfahren nach einem der vorhergehenden Ansprüche, wobei die Reduktionsbehandlung mit Wasserstoff durchgeführt wird.

14. Verfahren nach Anspruch 13, wobei die Wärmebehandlung in einer inerten Argonatmosphäre durchgeführt wird, bis eine Temperatur zwischen 280 und 320 °C erreicht wird, und die Reduktionsbehandlung durchgeführt wird, indem 10 bis 20 % Wasserstoffgas in die Argonatmosphäre bei derselben Temperatur gemischt werden.

15. Verfahren nach einem der vorhergehenden Ansprüche, wobei auf die Reduktionsbehandlung eine Kühlungsbehandlung unter inerter Atmosphäre bis hinunter auf Raumtemperatur folgt.

16. Verfahren nach Anspruch 15, wobei die inerte Atmosphäre Argon umfasst.

## Revendications

1. Procédé pour la production de catalyseurs alliés comprenant une multiplicité de métaux, comprenant l'étape de décomposer simultanément les complexes précurseurs desdits métaux avec les ligands organiques par moyen d'un traitement thermique, suivi par un traitement de réduction, où la différence dans les températures de décomposition desdits complexes de métaux est moins que 20 °C.

2. Procédé selon la revendication 1 où lesdits complexes précurseurs décomposés simultanément sont absorbés antérieurement sur un support inerte, comprenant facultativement du carbone conducteur.

3. Procédé selon la revendication 1 où les complexes précurseurs décomposés simultanément sont un complexe de platine et un complexe de ruthénium.

4. Procédé selon la revendication 3 où ledit complexe de platine et le complexe de ruthénium décomposés simultanément sont absorbés antérieurement sur un support inerte, comprenant facultativement du carbone conducteur.

5. Procédé selon la revendication 3 ou 4 où lesdits ligands organiques dudit complexe de platine sont les mêmes comme lesdits ligands organiques dudit complexe de ruthénium.

6. Procédé selon la revendication 3 où lesdits ligands organiques comprennent le 2,4- pentanedioate.

7. Procédé selon la revendication 6 où lesdits complexes organiques sont le Pt(acac)₂ et le Ru(acac)₃.

8. Procédé selon l'une quelconque des revendications antérieurs où ledit traitement thermique est réalisé dans un atmosphère inerte.

9. Procédé selon la revendication 8 où ladite atmosphère inerte comprend de l'argon.

10. Procédé selon l'une quelconque des revendications antérieurs où ledit traitement thermique comprend le chauffage avec une vitesse de montée d'au moins 20 °C/minute jusqu'à la température finale d'au moins 260 °C.

11. Procédé selon la revendication 10 où ladite vitesse de montée est d'au moins 30°C/minute et ladite température finale est entre 280 et 320°C.

12. Procédé selon la revendication 10 où ladite température finale est maintenue constante pour 2 à 4 heures.

13. Procédé selon l'une quelconque des revendications antérieurs où ledit traitement de réduction est réalisé avec de l'hydrogène.

14. Procédé selon la revendication 13 où ledit traitement thermique est réalisé dans une atmosphère inerte d'argon jusqu'à l'atteinte d'une température entre 280 et 320 °C et ledit traitement de réduction est réalisé en mélangeant 10 à 20% de gaz d'hydrogène dans ladite atmosphère inerte à la même température.

15. Procédé selon l'une quelconque des revendications antérieurs où ledit traitement de réduction est suivi par un traitement de refroidissement sous atmosphère inerte à la température ambiante.

16. Procédé selon la revendication 15 où ladite atmosphère inerte comprend de l'argon.
